# EUROPÄISCHE PATENTSCHRIFT

(11) **EP 3 147 143 B1**
(45) Veröffentlichungstag und Bekanntmachung des Hinweises auf die Patenterteilung: **26.12.2018**
(21) Anmeldenummer: 16182021.2
(22) Anmeldetag: 29.07.2016
(51) Int. Cl.: B62D 33/06, B60G 17/02

(54) **EINRICHTUNG UND VERFAHREN ZUR NIVEAUREGULIERUNG EINER FAHRERKABINE GEGENÜBER EINEM FAHRZEUGRAHMEN UND SPINDELTRIEB FÜR DIESE**
DEVICE AND METHOD FOR LEVELLING A VEHICLE CABIN RELATIVE TO A VEHICLE FRAME AND SPINDLE DRIVE FOR THEM
DISPOSITIF ET PROCEDE DE NIVELAGE D'UNE CABINE DE CONDUCTEUR PAR RAPPORT AU CHÂSSIS DE VÉHICULE ET ENTRAÎNEMENT À BROCHE ASSOCIÉ

(30) Priorität: 31.07.2015 DE 202015005309 U
(43) Veröffentlichungstag der Anmeldung: 29.03.2017
(73) Patentinhaber: Domin Tec Scout GmbH, 77815 Bühl (DE)
(72) Erfinder: Domin, Rainer, 77815 Bühl (DE)
(74) Vertreter: Ege Lee & Partner Patentanwälte PartGmbB

(56) Entgegenhaltungen:
- EP-A1- 0 795 459
- EP-A1- 1 627 756
- EP-A1- 1 970 228
- EP-A1- 1 970 293
- DE-A1-102007 025 468
- US-A- 3 829 119

## Beschreibung

Die Erfindung betrifft eine Einrichtung und ein Verfahren zur Niveauregulierung einer Fahrerkabine eines Nutzfahrzeugs gegenüber einem Fahrzeugrahmen und einen Spindelantrieb für diese.

Nutzfahrzeuge, beispielsweise Lastkraftwagen, Fahrzeuge für die Landwirtschaft und für den Baubetrieb und dergleichen weisen zumeist eine Fahrerkabine auf, die gegenüber dem Fahrzeugrahmen gedämpft ist. Eine derartige Dämpfung erfolgt, wie beispielsweise aus der DE102012200670 A1 hervorgeht in Lastkraftwagen pneumatisch wie luftgedämpft oder beispielsweise bei Traktoren hydraulisch. Die Aufnahme der Fahrerkabine erfolgt dabei zumeist in einer Vierpunktlagerung, wobei an vier Eckpunkten eine Dämpfereinheit vorgesehen sein kann. Um zusätzlich eine Wank- und Nickneigung der Fahrerkabine zu unterbinden, können die Dämpfereinheiten pneumatisch geregelt betrieben werden. Hierzu ist ein Kompressor beziehungsweise ein Druckspeicher zum Vorhalten komprimierter Luft, jeweils eine Druckleitung zu den Dämpfereinheiten sowie ein Steuergerät mit den entsprechenden elektrischen Leitungen vorzusehen. Eine derartige Installation ist arbeits- und materialintensiv und damit kostenaufwendig. Weiterhin sind aktiv betriebene pneumatisch betriebene Dämpfereinheiten aufgrund der prinzipbedingten Hysterese des kompressiblen Druckmittels nur mit einer Zeitverzögerung zu regeln, so dass schnell auftretende Kipp- und Neigevorgänge schwer zu kompensieren sind.

Um bei unter der Fahrerkabine angeordnetem Motor die Fahrerkabine abkippen zu können, ist beispielsweise aus den Druckschriften DE 10 2012 023 571 A1 und DE 36 42 938 A1 eine Kippvorrichtung für eine Fahrerkabine mittels eines Spindeltriebs bekannt. Eine Niveauregelung ist mittels des dort beschriebenen Spindeltriebs nicht möglich.

Aus den Dokumenten DE 10 2007 025 468 A1, DE 101 44 111 A1 und DE 201 05 329 U1 sind Niveauregelungen für Kraftfahrzeuge mittels Spindeltrieben bekannt, die jeweils zwischen einem Antriebsrad und einer Fahrzeugkarosserie vorgesehen sind. Diese Spindeltriebe ermöglichen keine getrennte Niveauregulierung zwischen Fahrerkabine und Fahrzeugrahmen, so dass bei gewünschtem, beispielsweise an eine Straßen- oder Geländeneigung angepasstem Betrieb des Fahrzeugrahmens eine Neigung der Fahrerkabine nicht ausgeglichen werden kann.

Aus dem Dokument EP 1 627 756 A1 ist eine Niveauregelung für ein Nutzfahrzeug bekannt, bei der eine Kabine des Nutzfahrzeugs mittels elektrisch betriebener Hubaktuatoren in einer Kipp- und Neigebewegung verstellbar ist.

Aus den Dokumenten US 2014/0298980 A1, US 20070169578 A1, DE 10 2009 016 928 A1 und DE 20 2014 007 860 U1 sowie DE 10 2007 025 468 A1 sind Spindeltriebe an sich bekannt.

Aufgabe der Erfindung ist die Weiterbildung einer Einrichtung und eines Verfahrens zur Niveauregelung einer Fahrerkabine eines Nutzfahrzeugs. Insbesondere ist Aufgabe der Erfindung, eine kostengünstige und schnell ansteuerbare Einrichtung zur Niveauregelung der Fahrerkabine vorzuschlagen.

Die Aufgabe wird durch die Einrichtung des Anspruchs 1, den Spindeltrieb des Anspruchs 7 und das Verfahren des Anspruchs 14 gelöst. Die von den Ansprüchen 1 und 7 abhängigen Ansprüche geben vorteilhafte Ausführungsformen der Ansprüche 1 und 7 wieder.

Die vorgeschlagene Einrichtung dient der Niveauregulierung einer Fahrerkabine eines Nutzfahrzeugs gegenüber einem Fahrzeugrahmen. Hierzu sind zwischen der Fahrerkabine und dem Fahrzeugrahmen vier Spindeltriebe beispielsweise an vier Ecken eines Vierecks wie beispielsweise eines Trapezes oder Rechtecks beispielsweise an oder in der Nähe von Ecken der Fahrerkabine oder eines Traggerüsts dieser angeordnet. Die vier Spindeltriebe mit zwei gegeneinander verlagerbaren Komponenten sind getrennt voneinander mittels eines Steuergeräts steuerbar und elektrisch, beispielsweise mittels eines Elektromotors betrieben. Durch den direkt mechanisch erzwungenen Zusammenhang zwischen Antrieb und Hub der Spindeltriebe kann eine direkte und im Wesentlichen hysteresefreie Steuerung der Spindeltriebe erfolgen, so dass mittels des eingestellten Hubs eine schnelle Anpassung der Ausrichtung der Kabine in eine entsprechende Lage, beispielsweise die horizontale Lage eingestellt werden kann. Bei einer selbsthemmenden Auslegung der Spindeltriebe kann zudem beispielsweise in einer Ruhelage des Nutzfahrzeugs oder auf langen ebenen Strecken eine vorgewählte Ausrichtung der Fahrerkabine ohne weitere Zufuhr von Energie beibehalten werden. Weiterhin sind die Zuleitungen zu den Spindeltrieben auf elektrische Steuer- und Versorgungsleitungen beschränkt, so dass ein einfacher Einbau und gegebenenfalls eine einfache Nachrüstung erzielt werden kann.

Neben der Vierpunktabstützung der Fahrerkabine mittels der Spindeltriebe kann die Fahrerkabine durch Stabilisatoren und dergleichen in der eingestellten Position oder Ausrichtung gestützt werden. Desweiteren können zumindest zwei in einer Ebene liegende Spindeltriebe zwischen Fahrerkabine und Fahrzeugrahmen verkippbar ausgebildet oder verkippbar aufgenommen sowie die anderen Spindeltriebe von der Fahrerkabine oder dem Fahrzeugrahmen entkoppelbar sein, um die Fahrerkabine im Falle eines unter dieser angeordneten Motors abkippen zu können. Alternativ kann die Fahrerkabine gegenüber einem Traggestell wie Hilfsrahmen abkippbar sein, wobei die Spindeltriebe zwischen Traggestell und Fahrerkabine angeordnet sind. Insoweit ist das Traggestell Teil der Fahrerkabine. Die Komponenten der Spindeltriebe können mittels jeweils eines Auges an der Fahrzeugkabine und an dem Fahrzeugrahmen aufgenommen sein. Die Verbindung zwischen Auge und Fahrerkabine beziehungsweise Fahrzeugrahmen kann begrenzt elastisch beispielsweise mittels einer Gummi/Metallverbindung ausgebildet sein.

Die Spindeltriebe an sich sind in Richtung ihres Hubs steif ausgebildet um eine direkte und unmittelbare Umsetzung einer gewünschten Ausrichtung der Fahrerkabine umzusetzen. Dabei sind beispielsweise Regelfrequenzen der Spindeltriebe bis zu 10 Hertz oder mehr von Vorteil. Um Schwingungen, beispielsweise schnelle Schwingungen unabhängig von den Spindeltrieben dämpfen zu können, kann seriell zu den Spindeltrieben eine Dämpfungseinrichtung vorgesehen sein. Um Bauraum zu sparen, können Dämpfungseinrichtung und Spindeltrieb eine Baueinheit bilden. Beispielsweise kann sich die Dämpfungseinrichtung an einer Seite mittelbar oder unmittelbar an der Fahrzeugkarosserie oder der Fahrerkabine und an der anderen Seite an einer der gegeneinander verlagerbaren Komponenten des Spindeltriebs abstützen.

Die Dämpfungseinrichtung enthält bevorzugt eine Federeinheit und einen Stoßdämpfer. Die Federeinheit kann mechanisch beispielsweise aus einer Schraubendruckfeder gebildet sein. Der Spindeltrieb kann dabei innerhalb des von der Schraubendruckfeder gebildeten Hohlraums untergebracht sein. Alternativ oder zusätzlich kann die Federeinrichtung pneumatisch beispielsweise aus einem Luftpuffer gebildet sein. Ist der Luftpuffer ringförmig ausgebildet, kann der Spindeltrieb entsprechend einer Unterbringung in einem Hohlraum der Schraubendruckfeder in dem freien Ringraum des Luftpuffers untergebracht sein. Der Luftpuffer kann in sich geschlossen sein oder in speziellen Ausführungsformen über einen Druckanschluss verfügen, so dass in diesem der Druck geregelt werden kann.

Alternativ zu einer um den Spindeltrieb angeordneten Federeinheit kann die Hülse zweigeteilt ausgebildet sein und die Federeinheit zwischen den beiden Hülsenteilen wirksam angeordnet sein.

Der Stoßdämpfer ist bevorzugt aus zwei gegeneinander verlagerbaren Komponenten, beispielsweise aus einer Hülse und einer in dieser geführten Kolbenstange gebildet, die parallel zur Federeinheit geschaltet sind. Hierbei kann eine Komponente mit einer Komponente des Spindeltriebs verbunden sein, so dass die jeweils gegenüberliegenden Komponenten des Spindeltriebs und des Stoßdämpfers beispielsweise mittels jeweils eines Auges an der Fahrerkabine und dem Fahrzeugrahmen befestigt sind. Die Dämpfung des Stoßdämpfers erfolgt beispielsweise hydraulisch mittels eines Dämpferöls. Eine Druck- und/oder Zugstufe kann dabei einstellbar sein oder auf die Anforderungen zur Dämpfung der entgegen der Wirkung der Federeinheit auftretenden Verlagerung der beiden Komponenten angepasst und fest ausgelegt sein.

Die vorgeschlagene Einrichtung kann für eine Niveauregelung im Stand vorgesehen sein. Hierbei kann beispielsweise anhand eines oder mehrerer Neigungssensoren die Neigung des Fahrzeugrahmens auf der Straße oder im Gelände erfasst und die Fahrerkabine auf ein gewünschtes Niveau, beispielsweise auf die Horizontale ausgerichtet werden. Alternativ oder zusätzlich ist die Niveauregelung während der Fahrt vorgesehen. Hierzu können Sensorsignale von im Nutzfahrzeug vorgesehenen Sensoren, beispielsweise Neigungs-, Beschleunigungs-, Geschwindigkeits- Gierwinkel-, Raddrehzahlsensoren, Drehzahlsensoren in Verbindung mit Getriebeübersetzungen und/oder dergleichen erfasst und ausgewertet und die Spindeltriebe entsprechend von dem Steuergerät zur Anpassung der Ausrichtung der Fahrerkabine gegenüber dem Fahrzeugrahmen verstellt werden. Die Anpassung der Verstellung kann an auf die Fahrerkabine wirkende Fliehkräfte, Fahrbahnunebenheiten, an eine Kompensation der Kabinenneigung beispielsweise in Kurven oder während Beschleunigungs- oder Bremsvorgängen und/oder dergleichen erfolgen. Hierbei können abhängig von einer vorhandenen oder nicht vorhandenen Dämpfungseinrichtung an den Spindeltrieben Regelfrequenzen zwischen einem und fünf Hertz, in besonders vorteilhafter Weise bis zu zehn Hertz vorgesehen sein. Das Steuergerät kann dabei ein eigenes Steuergerät der Einrichtung sein und beispielsweise mittels CAN-Bus mit weiteren Steuergeräten kommunizieren und Daten sowie Sensordaten austauschen. Alternativ können entsprechende Steuer- und Regelroutinen für die Einrichtung in einem zentralen Steuergerät untergebracht sein.

In einer besonders vorteilhaften Ausführungsform der Einrichtung kann vorgesehen sein, dass eine Niveauregelung der Fahrerkabine gegenüber der Fahrzeugkarosserie während der Fahrt vorausschauend vorgesehen ist. Hierzu wird die Fahrbahn in Fahrtrichtung vor dem Nutzfahrzeug mittels entsprechender Mittel und abhängig von der gefahrenen Geschwindigkeit in einem entsprechenden Abstand auf Unebenheiten abgetastet und vorausschauend eine Anpassung der Fahrerkabine an ein die Fahrerkabine verlagerndes Ereignis vorgenommen. Die Mittel zur vorausschauenden Abtastung der Fahrbahn können beispielsweise Radar- oder Lidarsysteme sein.

Die vorgeschlagene Einrichtung enthält vier bevorzugt gleichartig ausgebildete Spindeltriebe, die auch für andere Ausführungen vorteilhaft eingesetzt werden können. Ein derartiger Spindeltrieb weist zwei axial gegeneinander verlagerbare Komponenten auf, wobei eine Komponente des Spindeltriebs von einem Elektromotor drehangetrieben und drehentkoppelt mit einem Fahrzeugteil und die andere Komponente mit dem anderen Fahrzeugteil verbunden ist. Hierbei enthält eine Komponente eine Spindel wie Getriebespindel und die andere Komponente die Spindelmutter. Wird beispielsweise die Spindelmutter von einem fest an einer Komponente angeordneten Elektromotor drehangetrieben, wird eine drehfest angeordnete Spindel axial verlagert. Es versteht sich, dass Spindel, Spindelmutter, Elektromotor mit Stator und Rotor entsprechend axial und verdrehbar gelagert sind. Beispielsweise kann ein rohrhülsenförmiges Gehäuse wie Hülse vorgesehen sein, in dem der Elektromotor mit der Spindelmutter und der Spindel untergebracht und gelagert sind. Hierzu können an der Hülse entsprechende Lagerbünde vorgesehen sein, die beispielsweise bei einer mittels eines Kaltfließpressverfahrens hergestellten Hülse werkzeugfallend oder gegebenenfalls anschließend feinbearbeitet vorgesehen sind. Die Hülse kann als Kartusche ausgebildet sein und ein Befestigungsauge aufnehmen, so dass diese eine Komponente des Spindeltriebs bildet. Die andere Komponente kann die gegenüber der Hülse beispielsweise mittels eines Faltenbalgs oder dergleichen abgedichtete zweite Komponente mit einem Befestigungsauge bilden oder mit einem das Auge enthaltenden Befestigungsbauteil fest verbunden sein.

Um die Spindel vor Knickbelastung zu schützen, ist der Spindeltrieb erfindungsgemäß in einer beispielsweise aus einem Rohr oder Rohrabschnitt hergestellten Kartusche angeordnet. Die Kartusche ist dabei in einer Hülse axial verschieblich wie verschiebbar, beispielsweise teleskopartig untergebracht, die an dem Fahrzeugrahmen oder an der Fahrerkabine bevorzugt gelenkig befestigt ist. Die Spindel ist dabei in der Hülse fest aufgenommen. Durch den Knickschutz der ineinander beispielsweise mittels einer Gleit- oder Linearwälzlagerung geführten Kartusche und Hülse wird die Spindel vor Knickbelastung geschützt.

Die Kraftübertragung zwischen der Spindelmutter und der Spindel kann beispielsweise mittels eines Spindelgewindes wie beispielsweise eines Trapezgewindes oder Evolventengewindes vorgesehen sein. Das Trapez- oder Evolventengetriebe kann ein- oder mehrzügig ausgebildet sein. Die Spindel kann als Massivspindel oder als Hohlspindel ausgebildet sein. In speziellen Ausführungsformen kann bei ausreichender Festigkeit eine Kugelumlaufspindel vorgesehen sein. Die Regelung des Hubs kann durch Erfassung des Hubs mittels entsprechender Sensoren vorgesehen sein. Hierzu können entsprechende Streckensensoren eingesetzt werden. Es hat sich jedoch als vorteilhaft gezeigt, die Drehzahl des Elektromotors zu erfassen und unter Berücksichtigung der Übersetzung von beispielsweise vier bis neun der Spindel den Hub des beziehungsweise der Spindeltriebe zu bestimmen. Insbesondere kann bei einem Einsatz von bürstenlosen Elektromotoren die Sensorik (beispielsweise Hall-Sensoren) zur Erfassung des Drehwinkels des Rotors zu dessen elektronischer Kommutierung herangezogen werden.

Es hat sich als vorteilhaft erwiesen, wenn eine Übersetzung beziehungsweise Untersetzung zwischen der Drehzahl des Rotors des Elektromotors und eines Axialvorschubs der Spindel weiter vergrößert wird, um Elektromotoren mit hohen Drehzahlen, beispielsweise zwischen 5000 min⁻¹ und 10000 min⁻¹, bevorzugt 6000 min⁻¹ und 8000 min⁻¹ und geringer Leistung bei einem stationär wie stehendem Fahrzeug vorgegebenem Hub von beispielsweise 300 mm, bevorzugt zwischen 60 mm und 180 mm und dynamisch während der Fahrt zwischen ± 25mm und ± 50 mm einsetzen zu können. Es wird daher ein Spindeltrieb vorgeschlagen, bei dem zwischen der drehangetriebenen Komponente und dem Elektromotor ein Planetengetriebe angeordnet ist. Das Planetengetriebe kann aus drei Komponenten eines Sonnenrads, in einem gegebenenfalls verdrehbaren Steg verdrehbar aufgenommenen Planetenrädern und einem beispielsweise aus einer den Spindeltrieb aufnehmenden Hülse oder Teilen eines derartigen Planetengetriebes gebildet sein. Beispielsweise kann das Planetengetriebe aus einer die Planetenräder antreibenden Ankerwelle und einem Steg gebildet sein, der ein Gewinde wie Trapez- oder Evolventengewinde mit der Spindel ausbildet. Alternativ oder zusätzlich kann ein sogenanntes Planetenwälzgetriebe zwischen dem Rotor und der Spindel vorgesehen sein, bei dem die Planetenräder sowohl einen Zahnradabschnitt zur drehschlüssigen Verbindung mit einem Sonnenrad und/oder einem Hohlrad und einen Gewindeabschnitt zur drehschlüssigen Verbindung mit der Spindel aufweisen.

Gemäß einer vorteilhaften Ausführungsform eines Spindeltriebs mit Planetengetriebe kann das Planetengetriebe aus einem Planetenräder verdrehbar aufnehmenden, mit dem Rotor des Elektromotors drehfest verbundenen Planetenträger und einer von den Planetenrädern angetriebenen, ein Hohlrad bildenden Hülse gebildet sein. Die Hülse kann dabei das eigentliche Gehäuse des Spindeltriebs bilden. Die Hülse kann mittels eines Kaltfließpressverfahrens hergestellt sein. Die Axialanschläge wie Lagerbünde oder dergleichen beispielsweise für den Elektromotor und den Planetenträger und/oder die mit den Planetenrädern kämmende Innenverzahnung können werkzeugfallend vorgesehen sein oder nachträglich beispielsweise spanend feinbearbeitet werden. Die Planetenräder können zur Verhinderung von schnellem Verschleiß oder Geräuschentwicklungen gepaart ausgebildet sein.

Gemäß einer vorteilhaften Ausführungsform insbesondere bei einer vorgesehenen Unterbringung des Spindeltriebs innerhalb der Federeinheit einer Dämpfungseinrichtung können Spindeltrieb, Elektromotor und Planetengetriebe koaxial zueinander angeordnet sein, so dass besonders bauraumsparende Ausführungsformen erzielt werden, deren Außendurchmesser im Wesentlichen durch die das Hohlrad bildende Hülse begrenzt ist.

Zur Einsparung von Bauteilen kann zwischen Rotor und Planetenträger eine Ankerwelle ausgebildet sein, wobei die Ankerwelle einteilig einen Teil eines die Planetenräder aufnehmenden Käfigs bildet. Die auf diese Weise beispielsweise mittels eines Umformverfahrens hergestellte Ankerwelle kann einen Käfigteil bilden, an dem Seitenteile des Käfigs zwischen den über den Umfang verteilt angeordneten Planetenrädern bereits angeformt sind. Alternativ können derartige Seitenteile an einem den Käfig auf der gegenüber liegende Seite verschließenden Deckel angeordnet sein. Der Deckel kann als Umformteil hergestellt sein. Deckel und Käfig können miteinander verschweißt sein.

Alternativ können Käfig und Ankerwelle aus zwei separaten Teilen gebildet sein, die mittels einer Formschlussverbindung beispielsweise einer Hirth-Verzahnung miteinander verbunden sind.

Der Planetenträger kann zur Bildung einer Ruckdämpfung insbesondere in Drehrichtung axiale Zapfen ausbilden, die unter Zwischenlage von Elastomerelementen in Taschen eines mit der Ankerwelle verbundenen Topfs eintauchen.

Die Steuerung der Elektromotoren und die Versorgung dieser erfolgt über entsprechende Steuer- und Versorgungsleitungen zwischen dem Steuergerät und den einzelnen Spindeltrieben. Es hat sich alternativ als vorteilhaft erwiesen, mit einem Steuergerät nur Daten auszutauschen und daher nur eine Steuerleitung zwischen Steuergerät und Spindeltrieb vorzusehen und die Elektromotoren direkt mit der Bordspannung zu versorgen. Hierzu kann in jedem Spindeltrieb eine Vorortelektronik beispielsweise an einer mit dem Stanzgitter des Elektromotors verbundenen Platine zur Aufnahme einer Leistungselektronik vorgesehen sein. Hierbei kann die Leistungselektronik vom Steuergerät über die Steuerleitungen oder gegebenenfalls unter Wegfall dieser drahtlos gesteuert werden. Die Vorortelektronik kann weiterhin bei einem Anschluss an ein Bordkommunikationsnetz wie beispielsweise CAN-Bus Teile der Steuerelektronik zur Steuerung des Spindeltriebs enthalten, so dass das Steuergerät entlastet wird.

Das vorgeschlagene Verfahren dient der Niveauregelung einer Fahrerkabine eines Nutzfahrzeugs gegenüber einem Fahrzeugrahmen mittels der vorgeschlagenen Einrichtung. Hierbei wird eine vorgegebene, bevorzugt horizontale Ausrichtung der Fahrerkabine mittels der Erfassung und Auswertung von Sensordaten des Nutzfahrzeugs mittels eines Hubs der Spindeltriebe der Einrichtung eingestellt und laufend abhängig von Straßenunebenheiten korrigiert.

Nachfolgend sind Ausführungsbeispiele anhand der Figuren 1 bis 6 näher erläutert. Es zeigen:
- Figur 1: eine schematische Darstellung einer Einrichtung zur Niveauregelung eines Nutzfahrzeugs,
- Figur 2: einen Spindeltrieb der Einrichtung der Figur 1 im Schnitt,
- Figur 3: einen gegenüber dem Spindeltrieb der Figur 2 abgeänderten Spindeltrieb mit Planetengetriebe,
- Figur 4: einen gegenüber dem Spindeltrieb der Figur 2 abgeänderten Spindeltrieb mit geteilter Ankerwelle,
- Figur 5: einen gegenüber dem Spindeltrieb der Figur 3 abgeänderten Spindeltrieb mit Ruckdämpfung und
- Figur 6: einen Schnitt durch einen erfindungsgemäß gegen Knickbelastung gesicherten Spindeltrieb.

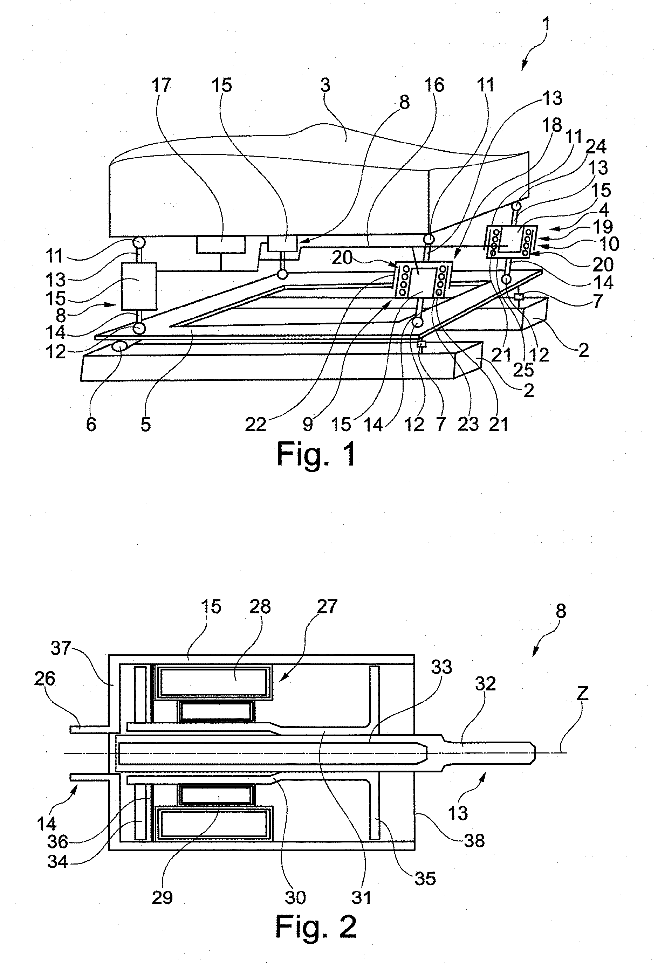

Die Figur 1 zeigt in schematischer Darstellung ein Detail des Nutzfahrzeugs 1 mit dem Fahrzeugrahmen 2 und der Fahrerkabine 3. Die Fahrerkabine 3 ist mittels der Einrichtung 4 zur Niveauregelung zwischen Fahrerkabine 3 und Fahrzeugrahmen 2 in dem gezeigten Ausführungsbeispiel auf dem Hilfsrahmen 5 aufgenommen, so dass die Fahrerkabine 3 mittels der Kipplager 6 und der nur angedeuteten Hebeeinrichtungen 7 gegenüber dem Fahrzeugrahmen 2 abkippbar ist, um beispielsweise einen nicht dargestellten Motor innerhalb des Hilfsrahmens 5 zu warten oder zu reparieren. Alternativ kann die Einrichtung 4 direkt zwischen der Fahrerkabine 3 und dem Fahrzeugrahmen 2 angeordnet sein. Zwischen Fahrerkabine 3 und Fahrzeugrahmen kann in nicht dargestellter Weise eine Verlagerungseinrichtung zur Verlagerung der Fahrerkabine nach hinten, das heißt entgegen der Fahrtrichtung vorgesehen sein. Die Verlagerungseinrichtung kann zwischen der Einrichtung 4 und der Fahrerkabine 3 oder zwischen der Einrichtung 4 und dem Hilfsrahmen 5 oder dem Fahrzeugrahmen vorgesehen sein.

Die Einrichtung 4 enthält vier - hier unterschiedlich dargestellte Varianten - Spindeltriebe 8, 9, 10, die hier jeweils an den Ecken der Fahrerkabine 3 mittels der Befestigungsaugen Auf die Mitteilung gemäß Artikel 94 (3) vom 07.03.2018 11, 12 an der Fahrerkabine 3 und dem Hilfsrahmen 5 verbunden sind. Die Spindeltriebe 8, 9, 10 sind mit jeweils einer ersten Komponente 13 mit der Fahrerkabine 3 und mit einer zweiten, gegenüber der ersten Komponente 13 axial verlagerbaren Komponente 14 mit dem Hilfsrahmen 5 beziehungsweise dem Fahrzeugrahmen 2 verbunden. Die axiale Verlagerung der Komponenten 13, 14 erfolgt mittels von innerhalb der Hülsen 15 der Spindeltriebe 8, 9, 10 angeordneter Elektromotoren, wobei beispielsweise eine sich verdrehbar und axial fest an der Hülse 15 abstützende Spindelmutter von dem Elektromotor drehangetrieben wird und damit eine zugehörige, drehfest und axial verlagerbar aufgenommene Spindel axial verlagert.

Die Spindeltriebe 8, 9, 10 werden über die lediglich exemplarisch dargestellten Leitungen 16 mit elektrischer Energie versorgt und gesteuert. Die Steuerung kann drahtlos oder über separate Leitungen erfolgen. Versorgungsleitungen können direkt zwischen einem Bordnetz und den Spindeltrieben 8, 9, 10 vorgesehen sein. Die Steuerung der Spindeltriebe erfolgt mittels des Steuergeräts 17, welches anhand von Informationen wie Datensätzen oder dergleichen von Sensoren und/oder anderen Einrichtungen des Nutzfahrzeugs 1 einen Istzustand der Lage der Fahrerkabine erfasst und mit einem Sollzustand vergleicht und gegebenenfalls vorausschauend den Istzustand laufend an den Sollzustand angleicht. Hierzu sind die Spindeltriebe 8, 9, 10 jeweils separat einstellbar geregelt. Beispielsweise kann eine Niveauregelung gemäß des sogenannten Skyhook-Prinzips erfolgen, bei dem die Fahrerkabine 3 laufend durch entsprechende Steuerung der einzelnen Spindeltriebe 8, 9, 10 mit einem Anheben oder Absenken der Fahrerkabine 3 auf die Horizontale oder eine vorgegebene oder einstellbare Neigung geregelt wird.

Den Spindeltrieben kann beispielsweise entsprechend den Varianten der Spindeltriebe 9, 10 eine Dämpfungseinrichtung 18, 19 seriell zugeordnet sein. Hierbei kann eine Federeinheit 20 um die Hülse 15 angeordnet sein und einer der Komponenten 13, 14 zugeordnet sein. Der zugehörige Stoßdämpfer kann in die entsprechende Komponente 13, 14 integriert sein. Der Spindeltrieb 9 zeigt beispielsweise die zwischen Spindeltrieb 9 und Fahrerkabine 3 wirksam angeordnete Dämpfungseinrichtung 18. Hierzu sind zwei ineinander geschachtelte, jeweils eine Schraubendruckfeder 21 aufnehmende Federbecher 22, 23 vorgesehen, so dass axialer Bauraum gespart wird. Der Federbecher 22 ist zwischen der Fahrerkabine 3 und der Hülse 15 angeordnet und der nicht dargestellte Stoßdämpfer in die Komponente 13 intergiert, so dass die Wirkung der Dämpfungseinrichtung seriell zu dem Spindeltrieb 9 zwischen Fahrerkabine 3 und Spindeltrieb 9 eintritt. Der Spindeltrieb 10 weist die Schraubendruckfeder 21 aufnehmende Federbecher 24, 25 auf, die zwischen der Hülse 15 und dem Hilfsrahmen 5 beziehungsweise Fahrzeugrahmen 2 angeordnet sind, so dass die Wirkung der Dämpfungseinrichtung 19 zwischen Spindeltrieb 10 und Fahrzeugrahmen eintritt. Der Stoßdämpfer ist dabei in die Komponente 14 integriert. Die Dämpfungseinrichtungen 18, 19 dämpfen Stöße und Schwingungen der Fahrerkabine 3 gegenüber dem Fahrzeugrahmen 2 unabhängig von der Regelung der Ausrichtung der Fahrerkabine 3 mittels der Spindeltriebe passiv, semiaktiv oder aktiv. Zur semiaktiven oder aktiven Dämpfung können die Stoßdämpfer und/oder Federeinheiten 20 entsprechende Stellglieder aufweisen.

Die Figur 2 zeigt einen Schnitt durch eine konstruktive Ausbildung eines einfachen Spindeltriebs 8 mit den beiden gegeneinander axial verlagerbaren Komponenten 13, 14 in vereinfachter Darstellung. Die Komponente 14 enthält die nur teilweise dargestellte, das Befestigungsauge 12 (Figur 1) aufnehmende Kolbenstange 26, die mit der Hülse 15 verbunden wie beispielsweise verschweißt ist.

In der einseitig mit dem Deckel 37 und auf der anderen Seite mit der Dichtung 38 versehenen Hülse 15 ist der Elektromotor 27 um die Verlagerungsachse z aufgenommen. Hierzu ist der Stator 28 mit der Hülse 15 fest beispielsweise mittels einer Kerbverzahnung verbunden. Der Rotor 29 ist mit der als Spindelmutter dienenden Ankerwelle 30 fest verbunden, beispielsweise versplintet oder kerbverzahnt. Die Ankerwelle 30 weist das bevorzugt trapezförmig ausgebildete Innengewinde 31 auf, welches mit dem Außengewinde 33 der Spindel 32 einen Gewindetrieb, bevorzugt ein Trapezgewinde ausbildet. Die Spindel 32 bildet die Komponente 13 und weist in nicht dargestellter Weise das Befestigungsauge 11 (Figur 1) auf.

Die von dem Rotor 29 drehangetriebene Ankerwelle 30 ist mittels der Stützscheibe 34 und der endseitig angeformten Anformung 35 gegenüber der Hülse zentriert und axial gelagert. Die hierzu vorgesehenen Axiallager sowie in der Hülse 15 vorgesehenen Lagerbünde sind nicht dargestellt. Die Ankerwelle 30 und die Hülse 15 sind bevorzugt aus Umformteilen hergestellt. Die Spindel 32 kann mittels eines oder mehrerer, nicht dargestellter Radiallager verdrehbar an der Hülse 15 zentriert und abgestützt sein.

Der Elektromotor 27 wird von außen mittels der Vorortelektronik 36 gesteuert. Die Vorortelektronik 36 kann die Leistungselektronik sowie eine Kommunikationselektronik zur Kommunikation mit dem Steuergerät 15 (Figur 1) enthalten.

Bei einem Drehantrieb der Ankerwelle 30 wird die Spindel 32 axial abhängig von der Drehrichtung des Rotors 29 verlagert und sorgt für ein An- oder Absenken des entsprechenden Teils der Fahrerkabine 3 (Figur 1). Zur Einsparung von axialem Bauraum ist die Kolbenstange 26 hohl ausgebildet, so dass die Spindel 32 axial in diese bei entsprechender Verlagerung eintauchen kann.

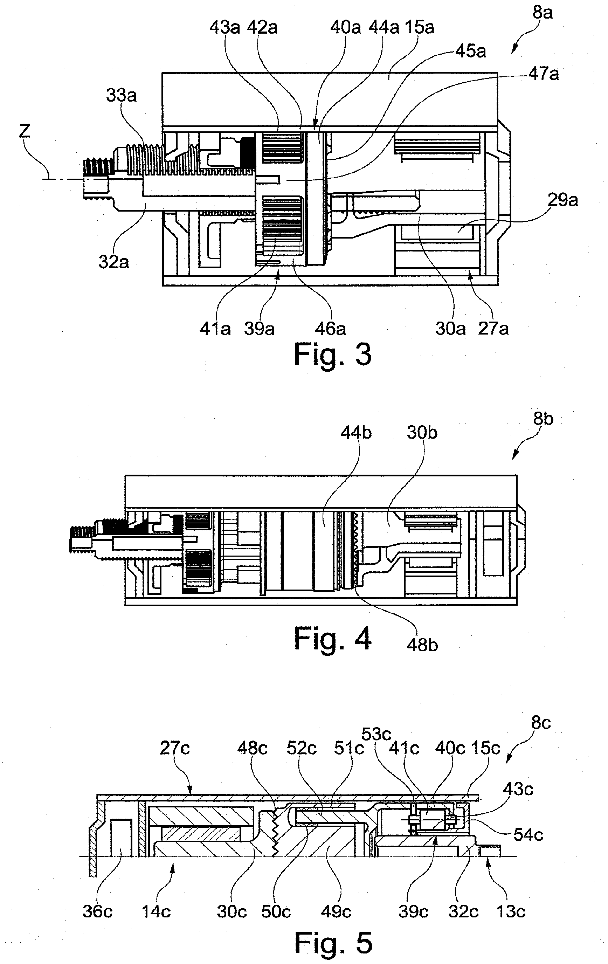

Im Unterschied zu dem Spindeltrieb 8 der Figur 2 weist der Spindeltrieb 8a der Figur 3 das zwischen der Ankerwelle 30a und der Spindel 32a koaxial zu der Verlagerungsachse z wie Rotorachse angeordnete Planetengetriebe 39a auf. Hierdurch wird zwischen dem Axialweg der Spindel 32a und der Drehzahl des Rotors 29a des Elektromotors 27a eine höhere Übersetzung eingestellt. Es kann daher ein Elektromotor 27a mit geringerer Leistung und höherer Drehzahl eingesetzt werden, der weniger Bauraum beansprucht. In dem dargestellten Planetengetriebe 39a ist der die über den Umfang verteilt angeordneten Planetenräder 41a verdrehbar aufnehmende Planetenträger 40a mit der Ankerwelle 30a verbunden. Die Planetenräder 41a kämmen einerseits mit der Innenverzahnung 43a der als Hohlrad 42a ausgebildeten Hülse 15a und andererseits mit dem Außengewinde 33a der als Sonnenrad ausgebildeten Spindel 32a.

Der Planetenträger 40a ist in dem gezeigten Ausführungsbeispiel als zweigeteilter Planetenkäfig 44a ausgebildet. Der erste Teil 45a des Planetenkäfigs 44a ist einteilig mit der Ankerwelle 30a verbunden. Die Ankerwelle 30a ist unter Anformung des ersten Teils 45a mittels eines Kaltfließverfahrens hergestellt. Der zweite Teil 46a des Planetenkäfigs 44a ist als Formteil ausgebildet und enthält die einteilig angeformten Seitenteile 47a zwischen den Planetenrädern 41a. Die Seitenteile 47a zwischen den Planetenrädern 41a sind mit dem ersten Teil 45a verbunden, beispielsweise verschweißt. In einer weiteren Ausführungsform können die Seitenteile 47a an dem ersten Teil 45a einteilig angeformt und mit dem zweiten Teil 46a verbunden wie verschweißt sein. Die beiden Teile 45a, 46a bilden jeweils eine axial fluchtende Lagerstelle für die Planetenräder 41a. Die Planetenräder 41a können zur Vermeidung hoher Abnutzung und Vibrationen gepaart sein, das heißt in der Fertigung mit einem gleichmäßigen Durchmesser innerhalb einer vorgegebenen Toleranz ausgewählt sein.

Die Figur 4 zeigt einen Schnitt durch den gegenüber dem Spindeltrieb 8a der Figur 3 abgeänderten Spindeltrieb 8b. Im Unterschied zu dem Spindeltrieb 8a sind die Ankerwelle 30b und der Planetenkäfig 44b voneinander getrennt jeweils als Umformteile ausgebildet. Die drehschlüssige Verbindung erfolgt in dem gezeigten Ausführungsbeispiel mittels der Hirth-Verzahnung 48b. In weiteren Ausführungsbeispielen kann die drehschlüssige Verbindung mittels anderer Formschlussverbindungen, beispielsweise Steckverbindungen wie Steckverzahnungen oder anderer Profilierungen vorgesehen sein.

Die Figur 5 zeigt eine weitere, den Spindeltrieben 8a, 8b ähnliche Ausführungsform eines Spindeltriebs 8c. Die Vorortelektronik 36c steuert den Elektromotor 27c an, der die Ankerwelle 30c in Rotation versetzt und die Kraft mittels der Hirth-Verzahnung 48c auf den Mitnehmer 49c überträgt. Das Dämpfungselement 50c verhindert den metallischen Kontakt zum Mitnehmer 49c und überträgt die Kräfte ruckgedämpft auf die über den Umfang verteilt angeordneten Öffnungen 51c des Mitnehmers 49c eintauchenden Finger 52c des Planetenträgers 40c. Das Planetengetriebe 39c ist mittels der Finger 52c mit dem Mitnehmer 49c und der Ankerwelle 30c gekoppelt, wobei die Schaltung des Planetengetriebes 39c gegenüber den Planetengetrieben der Figuren 3 und 4 leicht abgeändert ist. Die Planetenräder 41c sind in dem Planetenträger 40c und dem Deckel 53c verdrehbar gelagert und kämmen einerseits an der am Innenumfang des Planetenträgers 40c angeordneten Außenverzahnung 43c und andererseits mit der radial zwischen der Spindel 32c und dem Planetenträger 40c angeordneten Hülse 54c. Die Hülse 54c ist dabei mit der Spindel 32c verzahnt. Die Drehbewegung der Hülse 54c wird dabei in eine Axialbewegung der Spindel 32c gewandelt. In dem gezeigten Ausführungsbeispiel sind alle Bauteile in der beidseitig verschlossenen Hülse 15c aufgenommen, so dass ein geschlossenes Gehäuse des Spindeltriebs 8c gebildet ist. In dem gezeigten Ausführungsbeispiel sind in dem Gehäuse beziehungsweise in der Hülse 15c der Elektromotor 27c und das Planetengetriebe 39c mittels nicht dargestellter beispielsweise an Anformungen wie Lagerbünden der Hülse 15c abgestützter Axiallagerungen axial fest und verdrehbar aufgenommen, so dass bei Verdrehung der Ankerwelle 30c die Spindel 32c axial verlagert wird. Insoweit bilden die Hülse 54c die axial fest, verdrehbare Komponente 14c und die Spindel 32c die drehfeste, axial verlagerbare Komponente 13c des Spindeltriebs 8c. Die verdrehbare Komponente 13c des Spindeltriebs 8c ist gegenüber der Hülse 15c drehentkoppelt. Die Hülse 15c bildet eine erste Befestigung, beispielsweise ein Auge wie Befestigungsauge zur gelenkigen Aufnahme des Fahrzeugrahmens oder der Fahrerkabine, die Spindel 32c bildet die zweite Befestigung für das andere Fahrzeugteil.

Bei Bestromung des Elektromotors 27c entstehen abhängig von dessen Polung Auf - und Abwärtsbewegungen der Fahrerkabine, die den Bewegungen des Fahrzeugrahmens gegengerichtet sind oder vom Fahrer beabsichtigt eingeleitet werden. Die Vorortelektronik 36c steuert für sich oder in Verbindung mit einem externen Steuergerät abhängig von Eingangsgrößen diverser Sensoren beispielsweise zur Erfassung der Neigung, des Lenkwinkels, der Geschwindigkeit und/oder dergleichen den Elektromotor 27c. In der Vorortelektronik 36c kann die Leistungselektronik des Elektromotors 27c untergebracht sein. Steuer- und/Leistungselektronik können auch getrennt von dem Gehäuse vorgesehen sein. Entsprechend kann eine bedrahtete oder drahtlose Verbindung zwischen dem Elektromotor 27c und dem Steuergerät vorgesehen sein.

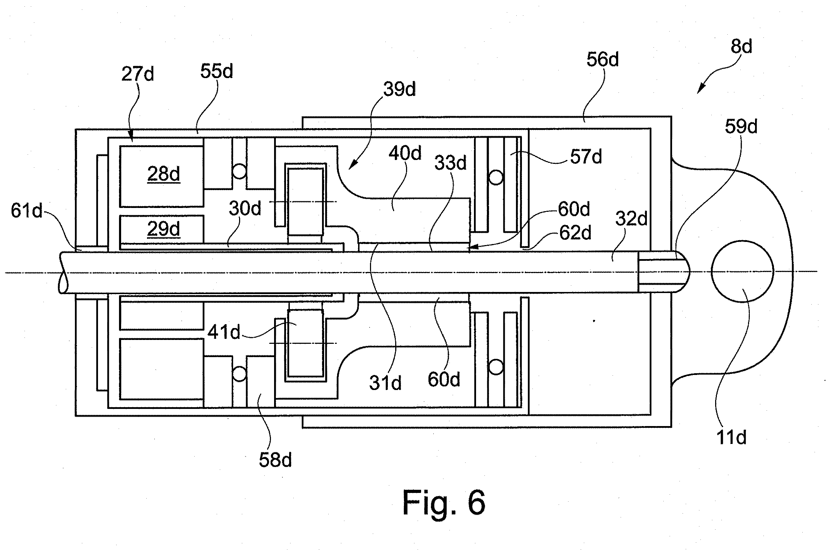

Die Figur 6 zeigt einen Schnitt durch den schematisch dargestellten Spindeltrieb 8d. Der Spindeltrieb 8d ist als Kartusche 55d ausgebildet, der axial verschieblich in der Hülse 56d gelagert ist. Die Lagerung erfolgt als Gleitlagerung zwischen dem Außenumfang der Kartusche 55d in dem Innenumfang der Hülse 56d. Alternativ kann ein Gleitlager mittels Gleitringen oder eine lineare Wälzlagerung vorgesehen sein. Die Hülse 56d ist mittels des Befestigungsauges 11d an der Fahrerkabine oder am Fahrzeugrahmen in bevorzugter Weise gelenkig aufgenommen. Die Kartusche 55d ist mittels eines nicht näher dargestellten Befestigungsmittels an dem gegenüberliegenden Fahrzeugbauteil - Fahrzeugrahmen oder Fahrerkabine - fest oder gelenkig aufgenommen. Durch die knicksteife Axiallagerung zwischen Kartusche 55d und Hülse 56d wird die Spindel 32d vor Knickbelastung geschützt, um beispielsweise ein Verklemmen des Trapezgewindes 60d zwischen Spindel 32d und dem Planetenträger 40d zu vermeiden. Hierbei ist der Planetenträger 40d axial fest mittels der Axiallager 57d, 58d in der Kartusche 55d gelagert. Die Spindel 32d ist drehfest mittels der Profilierung 59d beispielsweise eines Sechskants in der Hülse 56d aufgenommen. Die Kartusche 55d und die Hülse 56d sind miteinander drehfest verbunden. Hierzu kann direkt zwischen Kartusche 55d und Hülse 56d eine Drehmomentstütze, beispielsweise eine Längsverzahnung, eine längsverlagerbare Keilverbindung oder dergleichen vorgesehen sein.

In der Kartusche 55d ist der Elektromotor 27d mit dem fest in dieser angeordneten Stator 28d und der in der Kartusche 55d drehgelagerte Rotor 29d mit der Ankerwelle 30d angeordnet. Das nachgeschaltete Planetengetriebe 39d wird von der Ankerwelle 30d angetrieben. Hierzu treibt die Ankerwelle 30d beispielsweise fünf Planetenräder 41d an, die im Planetenräger 40d aufgenommen sind. Der Planetenträger 40d treibt mittels des bevorzugt selbsthemmenden, ein- oder zweizügigen, aus dem Innengewinde 31d des Planetenträgers 40d und aus dem Außengewinde 33d der Spindel 32d gebildeten, bevorzugt selbsthemmenden Trapezgewindes 60d oder im Idealfall mittels eines Evolventengewindes die Spindel 32d an. Durch die Übersetzung von beispielsweise fünf bis neun des Planetengetriebes 39d wird der hochdrehende Elektromotor 27d ins Langsame übersetzt und die Drehbewegung in eine Linearbewegung der Spindel gewandelt. Die Spindel 32d ist in der Kartusche 55d beispielsweise an den Öffnungen 61d, 62d gleit oder wälzgelagert. Kartusche 55d und Hülse 56d können aus Rohrabschnitten hergestellt sein und entsprechend umgeformt sein.

### Bezugszeichenliste

- 1: Nutzfahrzeug
- 2: Fahrzeugrahmen
- 3: Fahrerkabine
- 4: Einrichtung
- 5: Hilfsrahmen
- 6: Kipplager
- 7: Hebeeinrichtung
- 8: Spindeltrieb
- 8a: Spindeltrieb
- 8b: Spindeltrieb
- 8c: Spindeltrieb
- 8d: Spindeltrieb
- 9: Spindeltrieb
- 10: Spindeltrieb
- 11: Befestigungsauge
- 11d: Befestigungsauge
- 12: Befestigungsauge
- 13: Komponente
- 13c: Komponente
- 14: Komponente
- 14c: Komponente
- 15: Hülse
- 15a: Hülse
- 15c: Hülse
- 16: Leitung
- 17: Steuergerät
- 18: Dämpfungseinrichtung
- 19: Dämpfungseinrichtung
- 20: Federeinheit
- 21: Schraubendruckfeder
- 22: Federbecher
- 23: Federbecher
- 24: Federbecher
- 25: Federbecher
- 26: Kolbenstange
- 27: Elektromotor
- 27a: Elektromotor
- 27c: Elektromotor
- 27d: Elektromotor
- 28: Stator
- 28d: Stator
- 29: Rotor
- 29a: Rotor
- 29d: Rotor
- 30: Ankerwelle
- 30a: Ankerwelle
- 30b: Ankerwelle
- 30c: Ankerwelle
- 30d: Ankerwelle
- 31: Innengewinde
- 31d: Innengewinde
- 32: Spindel
- 32a: Spindel
- 32c: Spindel
- 32d: Spindel
- 33: Außengewinde
- 33a: Außengewinde
- 33d: Außengewinde
- 34: Stützscheibe
- 35: Anformung
- 36: Vorortelektronik
- 36c: Vorortelektronik
- 37: Deckel
- 38: Dichtung
- 39: Planetengetriebe
- 39a: Planetengetriebe
- 39c: Planetengetriebe
- 39d: Planetengetriebe
- 40a: Planetenträger
- 40c: Planetenträger
- 40d: Planetenträger
- 41a: Planetenrad
- 41c: Planetenrad
- 41d: Planetenrad
- 42a: Hohlrad
- 43a: Innenverzahnung
- 43c: Außenverzahnung
- 44a: Planetenkäfig
- 44b: Planetenkäfig
- 45a: Teil
- 46a: Teil
- 47a: Seitenteil
- 48b: Hirth-Verzahnung
- 48c: Hirth-Verzahnung
- 49c: Mitnehmer
- 50c: Dämpfungselement
- 51c: Öffnung
- 52c: Finger
- 53c: Deckel
- 54c: Hülse
- 55d: Kartusche
- 56d: Hülse
- 57d: Axiallager
- 58d: Axiallager
- 59d: Profilierung
- 60d: Trapezgewinde
- 61d: Öffnung
- 62d: Öffnung
- z: Verlagerungsachse

## Patentansprüche

1. Einrichtung (4) zur Niveauregulierung einer Fahrerkabine (3) eines Nutzfahrzeugs (1) gegenüber einem Fahrzeugrahmen (2), **dadurch gekennzeichnet, dass** zwischen der Fahrerkabine (3) und dem Fahrzeugrahmen (2) vier getrennt voneinander mittels eines Steuergeräts (17) steuerbare, elektrisch betriebene, einen variablen Hub einstellende Spindeltriebe (8, 8a, 8b, 8c, 8d, 9, 10) mit zwei gegeneinander verlagerbaren Komponenten (13, 13c, 14, 14c) angeordnet sind, wobei eine den Spindeltrieb (8d) aufnehmende Kartusche (55d) und eine mit der Spindel (32d) des Spindeltriebs (8d) verbundene Hülse (56d) axial verschieblich ineinander geführt sind.

2. Einrichtung (4) nach Anspruch 1, **dadurch gekennzeichnet, dass** seriell zu den Spindeltrieben (9, 10) eine Dämpfungseinrichtung (18, 19) vorgesehen ist.

3. Einrichtung (4) nach Anspruch 2, **dadurch gekennzeichnet, dass** sich die Dämpfungseinrichtung (18, 19) an einer Seite mittelbar oder unmittelbar an dem Fahrzeugrahmen (2) oder der Fahrerkabine (3) und an der anderen Seite an einer der gegeneinander verlagerbaren Komponenten (13, 14) des Spindeltriebs (9, 10) abstützt.

4. Einrichtung (4) nach Anspruch 3, **dadurch gekennzeichnet, dass** der Spindeltrieb (9, 10) innerhalb eines Hohlraums einer Federeinheit (20) angeordnet ist.

5. Einrichtung (4) nach einem der Ansprüche 1 bis 4, **dadurch gekennzeichnet, dass** Hülse (56d) und Kartusche (55d) gegeneinander gleit- oder wälzgelagert sind.

6. Einrichtung (4) nach einem der Ansprüche 1 bis 5, **dadurch gekennzeichnet, dass** eine Niveauregelung während der Fahrt anhand von Sensorsignalen des Nutzfahrzeugs (1) im Stand und/oder während der Fahrt, insbesondere mittels Signalen eines Radars vorausschauend vorgesehen ist.

7. Spindeltrieb (8, 8a, 8b, 8c, 8d, 9, 10) in einer Einrichtung (4) gemäß wenigstens einem der Ansprüche 1 bis 6 mit zwei axial gegeneinander verlagerbaren Komponenten (13, 13c, 14, 14c), wobei eine Komponente (13, 13c) des Spindeltriebs (8, 8a, 8b, 8c, 8d, 9, 10) von einem Elektromotor (27, 27c, 27d) drehangetrieben und drehentkoppelt mit einem ersten Fahrzeugteil und die andere Komponente (14, 14c) mit dem anderen Fahrzeugteil verbunden ist.

8. Spindeltrieb (8a, 8b, 8c, 8d) nach Anspruch 7, **dadurch gekennzeichnet, dass** zwischen der drehangetriebenen Komponente (13, 13c) und dem Elektromotor (27, 27c, 27d) ein Planetengetriebe (39, 39c, 39d) angeordnet ist.

9. Spindeltrieb (8a, 8b, 8d) nach Anspruch 8, **dadurch gekennzeichnet, dass** das Planetengetriebe (39a, 39c, 39d) aus einem Planetenräder (41a, 41c, 41d) verdrehbar aufnehmenden, mit dem Rotor (29a, 29d) des Elektromotors (27a, 27d) drehfest verbundenen Planetenträger (40a, 40c, 40d) und einer von den Planetenrädern (41a, 41c, 41d) angetriebenen Spindel (32a, 32c, 32d) gebildet ist.

10. Spindeltrieb (8a, 8b, 8c, 8d) nach Anspruch 8 oder 9, **dadurch gekennzeichnet, dass** Spindeltrieb (8a, 8b, 8c, 8d), Elektromotor (27a, 27c, 27d) und Planetengetriebe (39a, 39c, 39d) koaxial zueinander angeordnet sind.

11. Spindeltrieb (8a) nach einem der Ansprüche 8 bis 10, **dadurch gekennzeichnet, dass** zwischen Rotor (29a) und Planetenträger (40a) eine Ankerwelle (30a) ausgebildet ist, welche einteilig einen Teil (45a) eines die Planetenräder (41a) aufnehmenden Planetenkäfigs (44a) bildet.

12. Spindeltrieb (8, 8a, 8b, 8c, 9, 10c) nach einem der Ansprüche 8 bis 11, **dadurch gekennzeichnet, dass** in der Hülse (15, 15a, 15c) zumindest ein Lagerbund zur axialen Lagerung von Bauteilen bevorzugt mittels eines Kaltfließpressverfahrens vorgesehen ist.

13. Spindeltrieb (8d) nach einem der Ansprüche 8 bis 12, **dadurch gekennzeichnet, dass** der Spindeltrieb (8d) als Kartusche (55d) ausgebildet ist, die in einer die Spindel (32d) fest aufnehmenden, mit einem Fahrzeugteil bevorzugt gelenkig verbundenen Hülse (56d) axial verschieblich gelagert ist.

14. Verfahren zur Niveauregelung einer Fahrerkabine (3) eines Nutzfahrzeugs (1) gegenüber einem Fahrzeugrahmen (2) mittels einer Einrichtung (4) gemäß den Ansprüchen 1 bis 6, **dadurch gekennzeichnet, dass** eine vorgegebene, bevorzugt horizontale Ausrichtung der Fahrerkabine (3) mittels der Erfassung und Auswertung von Sensordaten des Nutzfahrzeugs mittels eines Hubs der Spindeltriebe (8, 8a, 8b, 8c, 9, 10) der Einrichtung (4) eingestellt und laufend abhängig von Straßenunebenheiten korrigiert wird.

## Claims

1. Device (4) for regulating the level of a driver's cab (3) of a utility vehicle (1) relative to a vehicle frame (2), **characterised in that** between the driver's cab (3) and the vehicle frame (2) four electrically operated spindle drives (8, 8a, 8b, 8c, 8d, 9, 10), which are controllable separately from one another by means of a control device (17) and adjust a variable lift, are arranged with two mutually displaceable components (13, 13c, 14, 14c), wherein a cartridge (55d) receiving the spindle drive (8d) and a sleeve (56d) connected to the spindle (32d) of the spindle drive (8d) are guided into one another in an axially displaceable manner.

2. Device (4) according to claim 1, **characterised in that** a damping device (18, 19) is provided serial to the spindle drives (9, 10).

3. Device (4) according to claim 2, **characterised in that** the damping device (18, 19) is supported on one side indirectly or directly on the vehicle frame (2) or the driver's cab (3) and on the other side on one of the components (13, 14) of the spindle drive (9, 10) which are displaceable relative to one another.

4. Device (4) according to claim 3, **characterised in that** the spindle drive (9, 10) is arranged inside a hollow cavity of a spring unit (20).

5. Device (4) according to any of claims 1 to 4, **characterised in that** the sleeve (56d) and cartridge (55d) are mounted relative to one another by a plain bearing or antifriction bearing.

6. Device (4) according to any of claims 1 to 5, **characterised in that** a level regulation is provided proactively during the journey with reference to sensor signals of the utility vehicle (1) when stationary and/or during travel, in particular by means of radar signals.

7. Spindle drive (8, 8a, 8b, 8c, 8d, 9, 10) in a device (4) according to a least one of claims 1 to 6 with two axially mutually displaceable components (13, 13c, 14, 14c), wherein one component (13, 13c) of the spindle drive (8, 8a, 8b, 8c, 8d, 9, 10) rotary driven and rotary uncoupled by an electric motor (27, 27c, 27d) is connected to a first vehicle part and the other component (14, 14c) is connected to the other vehicle part.

8. Spindle drive (8a, 8b, 8c, 8d) according to claim 7, **characterised in that** between the rotary driven component (13, 13c) and the electric motor (27, 27c, 27d) a planetary gear (39, 39c, 39d) is arranged.

9. Spindle drive (8a, 8b, 8d) according to claim 8, **characterised in that** the planetary gear (39a, 39c, 39d) is formed by a planetary carrier (40a, 40c, 40d) which receives planetary gears (41a, 41c, 41d) rotatably and is connected rotationally securely to the rotor (29a, 29d) of the electric motor (27a, 27d) and a spindle (32a, 32c, 32d) driven by the planetary gears (41a, 41c, 41d).

10. Spindle drive (8a, 8b, 8c, 8d) according to claim 8 or 9, **characterised in that** the spindle drive (8a, 8b, 8c, 8d), electric motor (27a, 27c, 27d) and planetary gears (39a, 39c, 39d) are arranged coaxially to one another.

11. Spindle drive (8a) according to any of claims 8 to 10, **characterised in that** between the rotor (29a) and planetary carrier (40a) an armature shaft (30a) is formed which forms in one piece a part (45a) of a planetary cage (44a) receiving the planetary gears (41a).

12. Spindle drive (8, 8a, 8b, 8c, 9, 10c) according to any of claims 8 to 11, **characterised in that** in the sleeve (15, 15a, 15c) at least one bearing flange is provided for axially bearing components, preferably by means of a cold forming method.

13. Spindle drive (8d) according to any of claims 8 to 12, **characterised in that** the spindle drive (8d) is designed as a cartridge (55d), which is mounted axially displaceably in a sleeve (56d) which securely mounts the spindle (32d) and is connected preferably flexibly to a vehicle part.

14. Method for regulating the level of a driver's cab (3) of a utility vehicle (1) relative to a vehicle frame (2) by means of a device (4) according to claims 1 to 6, **characterised in that** a predefined, preferably horizontal alignment of the driver's cab (3) is adjusted by means of the detection and evaluation of sensor data of the utility vehicle by means of a lift of the spindle drives (8, 8a, 8b, 8c, 9, 10) of the device (4) and is corrected continually depending on the unevenness of the road.

## Revendications

1. Dispositif (4) de nivelage d'une cabine de conducteur (3) d'un véhicule utilitaire (1) par rapport à un châssis de véhicule (2), **caractérisé en ce qu'**entre la cabine de conducteur (3) et le châssis de véhicule (2) sont agencés quatre entraînements à broche (8, 8a, 87b, 8c, 8d, 9, 10) séparés les uns des autres, réglant une course variable, à fonctionnement électrique, et susceptibles d'être commandés au moyen d'un appareil de commande (17), avec deux composants (13, 13c, 14, 14c) mutuellement déplaçables, une cartouche (55d) recevant l'entraînement à broche (8d) et une douille (56d) reliée à la broche (32d) de l'entraînement à broche (8d) étant axialement guidées à coulissement l'une dans l'autre.

2. Dispositif (4) selon la revendication 1, **caractérisé en ce qu'**un dispositif d'amortissement (18, 19) est prévu en série avec les entraînements à broche (9, 10).

3. Dispositif (4) selon la revendication 2, **caractérisé en ce que** le dispositif d'amortissement (18, 19) prend appui sur un côté indirectement ou directement sur le châssis de véhicule (2) ou sur la cabine de conducteur (3) et sur l'autre côté sur un des composants (13, 14) mutuellement déplaçables de l'entraînement à broche (9, 10).

4. Dispositif (4) selon la revendication 3, **caractérisé en ce que** l'entraînement à broche (9, 10) est agencé à l'intérieur d'une cavité d'une unité de ressort (20).

5. Dispositif (4) selon l'une des revendications 1 à 4, **caractérisé en ce que** la douille (56d) et la cartouche (55d) sont mutuellement montées à palier lisse ou à palier à roulement.

6. Dispositif (4) selon l'une des revendications 1 à 5, **caractérisé en ce que** pendant la conduite, un nivelage est prévu de façon anticipée à l'aide de signaux de capteur du véhicule utilitaire (1) en position stationnaire et/ou pendant la conduite, en particulier au moyen de signaux d'un radar.

7. Entraînement à broche (8, 8a, 8b, 8c, 8d, 9, 10) dans un dispositif (4) selon au moins l'une des revendications 1 à 6, avec deux composants (13, 13c, 14, 14c) qui sont axialement mutuellement déplaçables, un composant (13, 13c) de l'entraînement à broche (8, 8a, 8b, 8c, 8d, 9, 10) étant entraîné en rotation par un moteur électrique (27, 27c, 27d) et accouplé en rotation avec une première partie de véhicule et l'autre composant (14, 14c) étant relié à l'autre partie de véhicule.

8. Entraînement à broche (8a, 8b, 8c, 8d) selon la revendication 7, **caractérisé en ce qu'**un engrenage planétaire (39, 39c. 39d) est agencé entre le composant (13, 13c) entraîné en rotation et le moteur électrique (27, 27c, 27d).

9. Entraînement à broche (8a, 8b, 8d) selon la revendication 8, **caractérisé en ce que** l'engrenage planétaire (39a, 39c, 39d) est formé par un support planétaire (40a, 40c, 40d) recevant en rotation des roues planétaires (41a, 41c, 41d) et relié solidaire en rotation avec le rotor (29a, 29d) du moteur électrique (27a, 27d) et par une broche (32a, 32c, 32d) entraînée par les roues planétaires (41a, 41c, 41d).

10. Entraînement à broche (8, 8a, 8b, 8c, 8d) selon les revendications 8 ou 9, **caractérisé en ce que** l'entraînement à broche (8a, 8b, 8c, 8d), le moteur électrique (27a, 27c, 27d) et l'engrenage planétaire (39a, 39c, 39d) sont agencés coaxialement les uns par rapport aux autres.

11. Entraînement à broche (8a) selon l'une des revendications 8 à 10, **caractérisé en ce qu'**entre le rotor (29a) et le support planétaire (40a) est réalisé un arbre d'induit (30a) qui forme d'une seule pièce une partie (45a) d'une cage planétaire (44a) qui reçoit les roues planétaires (41a).

12. Entraînement à broche (8, 8a, 8b, 8c, 8d, 9, 10) selon l'une des revendications 8 à 11, **caractérisé en ce que** dans la douille (15, 15a, 15c) est prévue au moins une collerette de palier pour le montage axial d'éléments, de préférence au moyen d'un procédé d'extrusion à froid.

13. Entraînement à broche (8d) selon l'une des revendications 8 à 12, **caractérisé en ce que** l'entraînement à broche (8d) est réalisé sous forme de cartouche (55d) qui est montée à déplacement axial dans une douille (56d) recevant de manière solidaire la broche (32d) et reliée à une partie du véhicule de préférence de manière articulée.

14. Procédé de nivelage d'une cabine de conducteur (3) d'un véhicule utilitaire (1) par rapport à un châssis de véhicule (2) au moyen d'un dispositif (4) selon les revendications 1 à 6, **caractérisé en ce qu'**une orientation prédéterminée de la cabine de conducteur (3), de préférence horizontale, est réglée au moyen de la détection et de l'évaluation de données de capteur du véhicule utilitaire au moyen d'une course des entraînements à broche (8, 8a, 8b, 8c, 8d, 9, 10) du dispositif (4) et corrigée constamment en fonction d'irrégularités de surface de routes.
